# EUROPEAN PATENT SPECIFICATION

(11) **EP 3 413 576 B1**
(45) Date of publication and mention of the grant of the patent: **28.10.2020**
(21) Application number: 17174905.4
(22) Date of filing: 08.06.2017
(51) Int. Cl.: H04N 21/44, H04N 21/436

(54) **DEVICE FOR ADAPTING A TRANSPORT STREAM, VISUAL DISPLAY APPARATUS, AND METHOD OF ADAPTING A TRANSPORT STREAM**
VORRICHTUNG ZUR ANPASSUNG EINES TRANSPORTSTROMS, VISUELLE ANZEIGEVORRICHTUNG UND VERFAHREN ZUR ANPASSUNG EINES TRANSPORTSTROMS
DISPOSITIF D'ADAPTATION D'UN FLUX DE TRANSPORT, APPAREIL D'AFFICHAGE VISUEL ET PROCÉDÉ D'ADAPTATION D'UN FLUX DE TRANSPORT

(43) Date of publication of application: 12.12.2018
(73) Proprietor: Vestel Elektronik Sanayi ve Ticaret A.S., 45030 Manisa (TR)
(72) Inventor: EGEMEN, Tufan, 45030 Manisa (TR); KIRAZ, Alp, 45030 Manisa (TR)
(74) Representative: Kehl, Ascherl, Liebhoff & Ettmayr Patentanwälte Partnerschaft mbB

(56) References cited:
- EP-A1- 2 571 281
- Anonymous: "Common Interface Specification for Conditional Access and other Digital Video Broadcasting Decoder Applications (EN 50221)", EN 50221, 15 February 1997 (1997-02-15), pages 1-86, XP055372113, Retrieved from the Internet: URL:https://www.dvb.org/resources/public/s tandards/En50221.V1.pdf [retrieved on 2017-05-12]
- ANONYMOUS: "Guidelines for implementation and use of the common interface for DVB decoder applications", INTERNET CITATION, 1 January 1998 (1998-01-01), pages 1-52, XP003031182, Retrieved from the Internet: URL:http://www.dvb.org/technology/standard s/R206-001.V1.pdf [retrieved on 2013-06-01]
- EBU/ETSI-JTC: "ETR211E", ITU-T DRAFT ; STUDY PERIOD 1997-2000, INTERNATIONAL TELECOMMUNICATION UNION, GENEVA ; CH, vol. Study Group 9, 19 February 2001 (2001-02-19), pages 1-33, XP017493213, [retrieved on 2001-02-19]

## Description

The present invention relates to a device for adapting a transport stream according to claim 1, a visual display apparatus according to claim 6, and a method of adapting a transport stream according to claim 7.

### Background of the Invention

In digital television broadcasting, broadcasters often encrypt, or scramble, content before its transmission in order to make access to the broadcast content conditional on, for example, payment of a fee. When the broadcast content is received, it is converted into a transport stream, which must therefore be descrambled before it can be viewed. The common interface (CI), defined by European standard EN 50221-1997, allows the broadcast signal reception and transport stream decoding process to be separated out from the decryption or descrambling process. According to this standard, the signal reception and transport stream decoding process can be carried out by a host system, and a conditional access module (CAM) can be used to descramble the encrypted content. The common interface allows the host system and the CAM to talk to each other. Although a common interface can be integrated into a visual display apparatus, such as a television set, common interface equipment often takes the form of a separate set-top box with an interface, such as a slot, for receiving a smart card containing the CAM.

There are a large number of different makes and types of CI equipment available on the market, which therefore provide a wide variety of different output signals with different characteristics, such as signal frequency, strength and waveform. This has the disadvantage that at present, manufacturers of visual display apparatuses, such as television sets, must check the compatibility of their apparatus with known types of CI equipment and adjust the settings of their apparatus at the manufacturing stage to suit the various different types of CI equipment they known about. However, it may be that new types of CI equipment are released on to the market, which provide output signals with characteristics which the manufacturer has not accounted for, or that there already exist types of CI equipment which the manufacturer does not known about and which also provide output signals having characteristics incompatible with the visual display apparatus. In either case, connecting such an unaccounted-for type of CI equipment to the visual display apparatus in order to display received content can result in an undesirable pixellation effect of the displayed content, even if the content has been correctly descrambled by the CAM.

EP 2 571 281 describes an image processing apparatus comprising a tuner unit which receives a broadcast signal, a CAM unit which determines authority to view contents of the broadcast signal, a decoder unit which decodes an output from the CAM unit, a detector which determines a level of distortion of the output from the CAM unit, and a compensation unit which compensates for the distortion to render it equal to or less than a predetermined level.

### Object of the Invention

It is therefore an object of the invention to provide a device for adapting a transport stream, a visual display apparatus, and a method of adapting a transport stream.

### Description of the Invention

The object of the invention is solved by a device for adapting a transport stream signal according to claim 1. The device at least comprises a video signal pixellation detector, a processor and a memory. The processor is operable, in response to detection of pixellation in a video signal by the pixellation detector, to instruct a demodulator of a common interface equipment in communication with the device to vary a drive strength of the transport stream signal from which the video signal is derived. The memory is operable to save a value of the drive strength of the transport stream signal for the common interface equipment with which the device is in communication.

This solution is beneficial because instead of the manufacturer of a visual display apparatus, such as a television set, having to adapt the apparatus during manufacture to a wide variety of different types of common interface equipment, the device can be used to adapt the behaviour of the common interface equipment to suit the visual display apparatus. Moreover, the risk that there are any types of common interface equipment with which the display apparatus is incompatible is thereby greatly reduced and can possibly be eliminated. Even if the display apparatus is connected to an unknown common interface equipment, the risk that the common interface equipment will produce an undesirable pixellation effect of the displayed content is thereby also greatly reduced or eliminated. The memory allows the device to recognize types of common interface equipment it has previously encountered, reducing the total number of different types of unknown common interface equipment as new types of common interface equipment are encountered and allowing a previously encountered type of common interface equipment to have its behaviour adapted to suit the visual display apparatus without the need to go through a process of calibration to find the best value of the drive strength of the transport stream to use.

Advantageous embodiments of the invention may be configured according to any claim and/or part of the following description.

Preferably, the processor is also operable, in response to detection of pixellation in a video signal by the pixellation detector, to instruct a decoder of the common interface equipment to vary a phase shift of a clock signal of the transport stream, and the memory is operable to save a value of the phase shift of the clock signal for the common interface equipment with which the device is in communication.

This solution is beneficial because even if variation of the drive current of the transport stream signal from which the video signal is derived cannot eliminate a pixellation effect from the video signal entirely, additionally varying the phase shift of the clock signal of the transport stream can be used to reduce the pixellation still further and thereby eliminate it. Once again, this enables the device to be used to adapt the behaviour of the common interface equipment to suit the visual display apparatus, and obviates the need for the manufacturer of the apparatus to adapt the apparatus during manufacture to a wide variety of different types of common interface equipment. It also further reduces the risk that there are any types of common interface equipment with which the display apparatus is incompatible. The memory allows the device to recognize types of common interface equipment it has previously encountered, reducing the total number of different types of unknown common interface equipment as new types of common interface equipment are encountered and allowing a previously encountered type of common interface equipment to have its behaviour adapted to suit the visual display apparatus without the need to go through a process of calibration to find the best value of the phase shift of the transport stream clock signal to use.

Preferably, the processor is operable to instruct at least one of the demodulator to incrementally increase the drive strength and the decoder to incrementally increase the phase shift, and the pixellation detector is operable to check for a pixellation in a video signal after each respective incremental increase in the drive strength and/or the phase shift, and to report on the detection of any pixellation in the video signal to the processor after each such respective incremental increase.

This solution is beneficial because it allows the device to search systematically for the best values of the drive strength and/or the phase shift to reduce or eliminate any pixellation from the video signal.

Preferably, the pixellation detector is operable to detect the severity of any pixellation effect in the video signal and to report that severity to the processor, and the processor is operable to instruct at least one of the demodulator to vary the drive strength and the decoder to vary the phase shift according to the severity of the pixellation effect reported to the processor by the pixellation detector.

In other words, according to this embodiment, the pixellation detector does not just perform a yes/no test on the presence or absence of pixellation in the video signal, but also measures the amount of any pixellation present. This solution is beneficial because it allows the drive strength and/or the phase shift, which produce the least amount of pixellation to be identified.

Preferably, the processor is operable to recognize the same type of common interface equipment put in communication with the device, recall at least one of the saved values of the drive strength and of the phase shift from the memory for the same type of common interface equipment, and to instruct at least one of the demodulator and the decoder of the same type of common interface equipment to adjust the actual values of the drive strength and of the phase shift to match the respective saved values of the drive strength and/or the phase shift recalled from the memory.

This solution is beneficial because if the device encounters the same type of common interface equipment it has encountered previously, it can quickly and automatically adapt the transport stream being processed by the common interface equipment to suit a visual display apparatus without the need to discover what the best values of the drive strength and/or the phase shift to eliminate any pixellation are.

The present invention also relates to a visual display apparatus as described herein. The visual display apparatus at least comprises a display screen and a device for adapting a transport stream signal as described herein which provides an output to the display screen. The visual display apparatus may further comprise a video scaling unit which receives an input from the device and provides an output to the display screen.

This solution is beneficial because although the device for adapting a transport stream signal as described herein may be provided as a stand-alone unit for attachment to the video outlet of a common interface equipment, it is most advantageously incorporated into a visual display apparatus, such as a television set, thereby rendering the visual display apparatus compatible with a wide variety of different types of common interface equipment, without the need for a manufacturer of the visual display apparatus having laboriously to check the compatibility of the visual display apparatus with different types of common interface equipment during manufacture.

The present invention also relates to a method of adapting a transport stream signal. The method at least comprises checking a video signal for pixellation. If no pixellation is detected in the video signal, the video signal is output, whereas if pixellation is detected in the video signal, the following additional steps are carried out. Varying a drive strength of the transport stream signal from which the video signal is derived, rechecking the video signal for pixellation after varying the drive strength, and if no pixellation is detected in the video signal after varying the drive strength, saving the value of the drive strength for which no pixellation is detected for a common interface equipment which is processing the transport stream signal, and outputting the video signal derived from the transport stream signal with the saved value of the drive strength for which no pixellation is detected, whereas if pixellation is still detected in the video signal after varying the drive strength, saving the value of the drive strength for which the least pixellation is detected for the common interface equipment.

As used in the preceding paragraph, the phrase "for a common interface equipment which is processing the transport stream signal" means for a particular type of common interface equipment, as identified, for example, by its make and model number. This solution is beneficial because it allows the best value of the drive strength which reduces or eliminates pixellation in the video signal for the particular type of common interface equipment to be found and saved for later use with the same type of common interface equipment.

Preferably, varying a drive strength of the transport stream signal from which the video signal is derived comprises incrementally increasing the drive strength, and rechecking the video signal for pixellation after varying the drive strength comprises rechecking the video signal for pixellation after each incremental increase in the drive strength. This solution is beneficial because it allows the best value of the drive strength to be found quickly and in a systematic fashion.

If pixellation is still detected in the video signal after varying the drive strength, two alternative options are available. In a first alternative, the video signal derived from the transport stream signal with the saved value of the drive strength for which the least pixellation is detected can be output. This minimizes the amount of pixellation in the video signal. Preferably, however, in a second alternative, the method may further comprise varying a phase shift of the transport stream clock signal, rechecking the video signal for pixellation after varying the phase shift until no pixellation is detected in the video signal, saving the value of the phase shift for which no pixellation is detected for the common interface equipment, and outputting the video signal derived from the transport stream signal with the saved values of the drive strength for which the least pixellation is detected and of the phase shift.

As used in the preceding paragraph, the phrase "for the common interface equipment" again means for the particular type of common interface equipment, as identified, for example, by its make and model number. This solution is beneficial because it allows the best value of the phase shift, which eliminates pixellation in the video signal for the particular type of common interface equipment to be found, to be used to eliminate the pixellation, and also to be saved for later use if the same type of common interface equipment is encountered again.

Preferably, varying a phase shift of the transport stream clock signal comprises incrementally increasing a phase shift of the transport stream clock signal, and rechecking the video signal for pixellation after varying the phase shift until no pixellation is detected in the video signal comprises rechecking the video signal for pixellation after each incremental increase in the phase shift until no pixellation is detected in the video signal. This solution is beneficial because it allows the best value of phase shift to be found quickly and in a systematic fashion.

Preferably, the method further comprises detecting the severity of any pixellation effect in the video signal; and varying at least one of the drive strength and the phase shift according to the severity of the pixellation effect. This solution is beneficial because it allows the drive strength and/or the phase shift, which produce the least amount of pixellation to be identified, and for the pixellation effect to be reduced, even if pixellation cannot be eliminated from the video signal completely.

Preferably, the method further comprises recognizing the same type of common interface equipment, recalling at least one of the saved values of the drive strength and of the phase shift for the same type of common interface equipment, and adjusting at least one of the actual values of the drive strength and of the phase shift to match the respective saved values of the drive strength and/or the phase shift.

This solution is beneficial because if the same type of common interface equipment as has been encountered previously is encountered again, the transport stream signal being processed by the newly encountered common interface equipment can be quickly and automatically adapted to suit a visual display apparatus without the need to discover what the best values of the drive strength and/or the phase shift to eliminate any pixellation are.

Preferably, the method further comprises scaling the video signal, and displaying the scaled video signal on a display screen. This solution is beneficial because a method of adapting a transport stream signal is thereby integrated into a method of displaying a video signal.

The present invention further relates to a computer program product or a program code or system for executing one or more than one of the herein described methods.

Further features, goals and advantages of the present invention will now be described in association with the accompanying drawings, in which exemplary components of the invention are illustrated. Components of the devices and methods according to the invention which are at least essentially equivalent to each other with respect to their function can be marked by the same reference numerals, wherein such components do not have to be marked or described in all of the drawings.

In the following description, the invention is described by way of example only with respect to the accompanying drawings.

### Brief Description of the Drawings

Fig. 1 is a schematic block diagram of a common interface equipment;
Fig. 2 is a schematic block diagram of an embodiment of a device for adapting a transport stream in communication with the common interface equipment of Fig. 1;
Fig. 3 is a flow diagram of a first embodiment of a method of adapting a transport stream; and
Fig. 4 is a process diagram of a second embodiment of a method of adapting a transport stream.

### Detailed Description of the Drawings

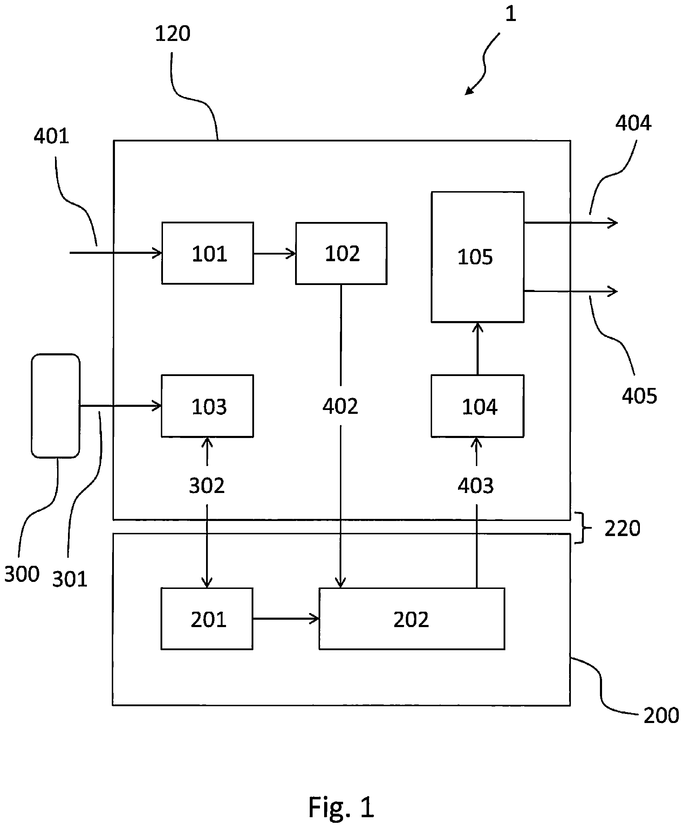

Fig. 1 schematically shows a common interface equipment 1. In Fig. 1, blocks schematically represent functional units and may be embodied in a variety of different physical states as either hardware, software or a combination of both. The common interface equipment 1 comprises a host 120 and a conditional access module (CAM) 200 in communication with each other via a common interface 220. The host 120 comprises a broadcast television signal tuner 101, a demodulator 102, a microprocessor 103, a demultiplexer 104 and an MPEG decoder 105. The tuner 101, the demodulator 102, the demultiplexer 104 and the MPEG decoder 105 are under control of the microprocessor 103. The CAM 200 comprises a microprocessor 201 and a descrambler 202. The descrambler 202 is under control of the microprocessor 201. In this embodiment, a remote control unit 300 is also associated with the common interface equipment 1.

During operation of the common interface equipment 1, a broadcast television signal 401 is received by the tuner 101, and passed from there to the demodulator 102, where the received signal is demodulated into a scrambled transport stream signal 402. By means of the associated remote control unit 300, a user of the equipment 1 may send a remote control signal 301 to the microprocessor 103 of the host 120, for example to select a television channel to view, a viewing angle, an electronic programme guide, and so on. The scrambled transport stream signal 402 is passed across the common interface 220 to the descrambler 202 of the CAM 200, and control signals, for example containing data indicating which television channel the user has selected, are also passed from the microprocessor 103 of the host 120 to the microprocessor 201 of the CAM 200. Under control of the microprocessor 201, the descrambler 202 generates a descrambled transport stream signal 403 from the scrambled transport stream signal 402 and passes it back across the common interface 220 to the demultiplexer 104 of the host 120. The demultiplexer 104 then demultiplexes the descrambled transport stream signal 403 and passes it to MPEG decoder 105 for decoding into a video signal 404 and an audio signal 405 for output to a visual display device, such as a television set.

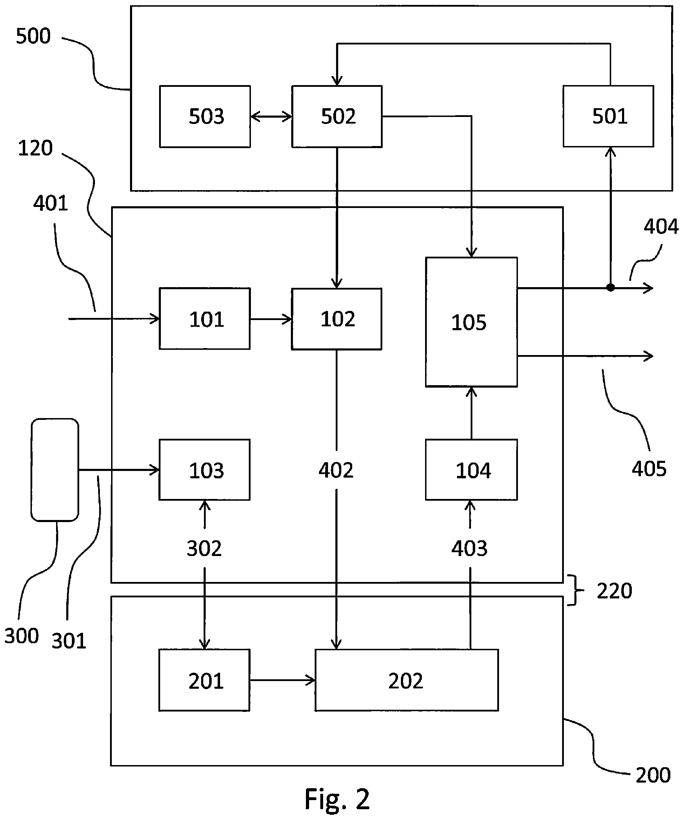

Fig. 2 schematically shows an embodiment of a device 500 for adapting a transport stream signal in communication with the common interface equipment 1 shown in Fig. 1. Once again, in Fig. 2, blocks schematically represent functional units and may be embodied in a variety of different physical states as either hardware, software or a combination of both. The device 500 for adapting a transport stream signal comprises a video signal pixellation detector 501, a microprocessor 502 and a memory 503. The video signal pixellation detector 501 is connectable to an output for the video signal 404 from the common interface equipment 1. Whereas the video signal pixellation detector 501 could, in principle, also be connected to an output for the audio signal 405 from the common interface equipment 1, this is unnecessary, since any correction of a pixellation in the video signal 404 will automatically result in simultaneous correction of any distortion present in the audio signal 405 as well.

The memory 503 is under control of the microprocessor 502and the microprocessor 502 can save data to and recall data from the memory 503. The microprocessor 502 is also able to receive data from the video signal pixellation detector 501 and is further able to communicate with the microprocessor 103 of the host system 120 of the common interface equipment 1. Thus the microprocessor 502 can extract information from the host system 120, for example concerning the identity of the common interface equipment 1, and can also instruct the host system 120 to perform certain operations on the transport stream signal being processed by the common interface equipment 1, in a manner to be described in greater detail below.

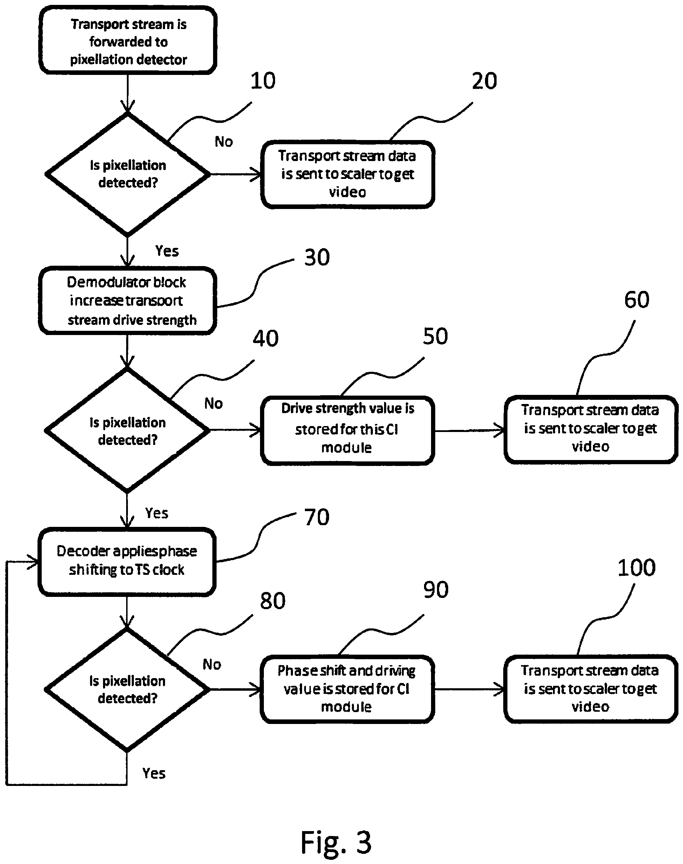

During operation of the device 500 for adapting a transport stream signal, the video signal pixellation detector 501 checks the video signal 404 output by the common interface equipment 1 for the presence of any pixellation effect, and provides data to the microprocessor 502 on the presence or absence of any pixellation, as well as possibly also on the severity of any pixellation effect. If the pixellation detector 501 detects any pixellation effect in the video signal 404, the microprocessor 502 does several things based on the data it receives from the pixellation detector 501, as follows. Firstly, the microprocessor 502 saves data in the memory 503 denoting the best values for the drive strength of the transport stream signal, as well as possibly also for the phase shift of the transport stream clock signal, which minimize or eliminate any pixellation effect for the particular type of common interface equipment 1 with which the device 500 is in communication. Secondly, the microprocessor 502 also instructs the demodulator 102 to vary the drive strength of the transport stream signal 402, as well as possibly also instructing the MPEG decoder 105 to vary a phase shift of a clock signal of the transport stream 403, in order to minimize or eliminate any pixellation effect for the particular type of common interface equipment 1 with which the device 500 is in communication. These operations are carried out by the microprocessor 502 according to a process which will now be described in greater detail with reference to Fig. 3.

Fig. 3 schematically shows a first embodiment of a method of adapting a transport stream signal. Initially, the descrambled transport stream signal 403 is forwarded to the pixellation detector 501 as a video signal 404, where the video signal 404 is checked 10 for pixellation. If no pixellation is detected in the video signal, the video signal is output 20 to a visual display device, such as to a video scaler of a television set. On the other hand, if pixellation is detected in the video signal, a drive strength of the transport stream signal 402 from which the video signal 404 is derived is incrementally increased 30. The video signal 404 is rechecked 40 for pixellation after each incremental increase in the drive strength.

After each incremental increase in the drive strength, if no pixellation is detected in the video signal 404, the value of the drive strength for which no pixellation is first detected is saved 50 for whichever type of common interface equipment 1 is processing the transport stream signal. In other words, the microprocessor 502 saves in the memory 503 data which records that the common interface equipment 1 manufactured, for example, by company XYZ with model number 1234, requires a drive strength of a particular value to eliminate any pixellation from the video signal. In addition, the video signal derived from the transport stream signal with the saved value of the drive strength for which no pixellation is detected by the pixellation detector 501 is output 60 to a visual display device.

On the other hand, if pixellation is still detected in the video signal 404 by the pixellation detector 501, even after the drive strength has been incrementally increased to its maximum value, the value of the drive strength for which the least amount of pixellation is detected for the common interface equipment 1 is saved instead, and the phase shift of the transport stream clock signal is incrementally increased 70. The video signal 404 is rechecked 80 for pixellation by the pixellation detector 501 after each incremental increase in the phase shift until no pixellation is detected in the video signal 404.

At this time, the value of the phase shift for which no pixellation is detected is also saved 90 for whichever type of common interface equipment 1 is processing the transport stream signal. In other words, the microprocessor 502 saves in the memory 503 data which records that the common interface equipment 1 manufactured, for example, by company XYZ with model number 1234, requires a particular value of the phase shift of the transport stream clock signal to eliminate any pixellation from the video signal. Additionally, the video signal derived from the transport stream signal with the saved values of the drive strength for which the least pixellation is detected and of the phase shift for which no pixellation is detected is output 100 to a visual display device.

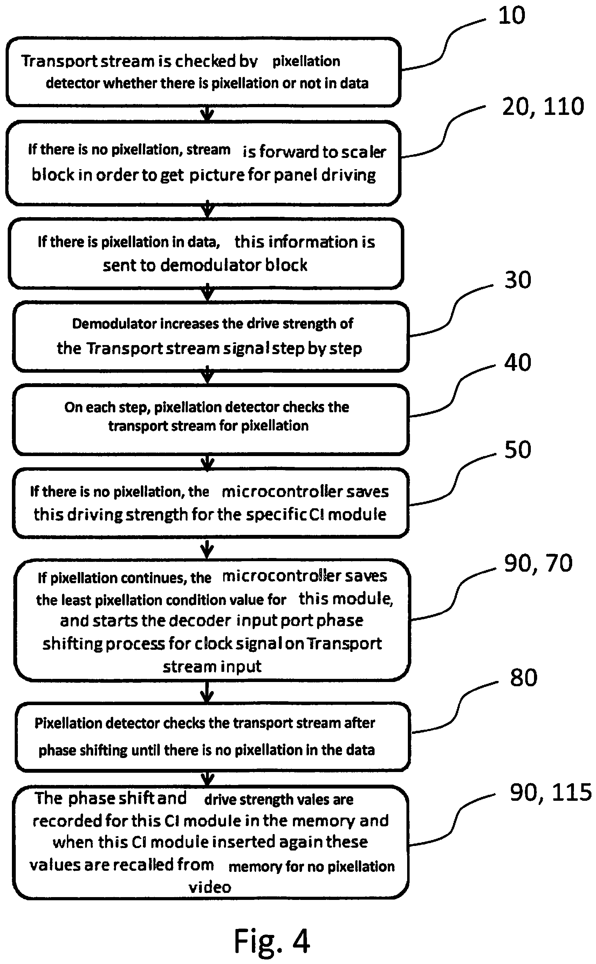

Fig. 4 schematically shows a second embodiment of a method of adapting a transport stream signal. As with the first embodiment described above in relation to Fig. 3, the method of this second embodiment also comprises the same operations to adapt the transport stream signal which are therefore labelled in Fig. 4 with the same reference numerals 10 to 100 as they are in Fig. 3. However, in addition thereto, the method of Fig. 4 further comprises scaling 110 the output video signal 404, and displaying the scaled video signal on a display screen of a visual display apparatus.

Moreover, the second embodiment of the method schematically shown in Fig. 4 also comprises the following operations. If the same type of common interface equipment 1 is put in communication with the device 500, the type of common interface equipment 1 is recognized by the device 500 and the values of the drive strength and of the phase shift saved in the memory 503 for this particular type of common interface equipment 1 are recalled 115 from the memory 503. These saved values of the drive strength and of the phase shift are then used to adjusting the actual values of the drive strength and of the phase shift to match the saved values of the drive strength and the phase shift, so that any pixellation effect is thereby eliminated from the video signal without any need for the device 500 to carry out a process of discovering the best values of the drive strength and the phase shift to eliminate the pixellation effect. In other words, the device 500 automatically adapts the transport stream signal being processed by the common interface equipment 1 to eliminate any pixellation without the need to repeat the calibration process described above in relation to Fig. 3 on another example of the same type of common interface equipment 1. This therefore saves time in eliminating the pixellation from the video signal 404.

In summary, therefore, the present invention provides a device and method for use with a common interface (CI) equipment, the latter of which is for receiving, decoding and decrypting scrambled television broadcast content, such as video, audio and data. The device is for adapting a transport stream signal being processed by the common interface equipment to make the transport stream signal compatible with a visual display apparatus, such as a television set. The device at least comprises a video signal pixellation detector, a processor and a memory. The processor is operable, in response to detection by the pixellation detector of pixellation in a video signal output from the common interface equipment, to instruct a demodulator of the common interface equipment to vary a drive strength of the transport stream signal from which the video signal is derived. If varying the drive strength does not eliminate the pixellation completely, the phase shift of the transport stream clock signal can be varied as well. The memory is operable to save a value of the transport stream signal drive strength, and possibly also of the phase shift of the transport stream clock signal, for the particular type of common interface equipment with which the device is in communication. Thus the best value of the drive strength, and possibly also of the phase shift, which reduce or eliminate pixellation from the video signal can be saved and recalled for later use if the device is put into communication with the same type of common interface equipment again. The device is most advantageously incorporated into a visual display apparatus, such as a television set. In this way, the visual display apparatus can be used to display broadcast content received by a wide range of different types of common interface equipment by adapting the behaviour of the CI equipment to suit the visual display apparatus. This obviates the need for manufacturers of visual display apparatus to test their apparatuses with a wide variety of different types of CI equipment during manufacture, and greatly reduces or eliminates the risk that the display apparatus will encounter a type of CI equipment with which it is incompatible.

### Reference Numerals:

| | | | |
|---|---|---|---|
| 1 | Common interface (CI) equipment | 120 | Host system |
| 10 | Check for pixellation | 200 | Conditional access module (CAM) |
| 20 | Output video signal | 201 | Microprocessor |
| 30 | Increase drive strength | 202 | Descrambler |
| 40 | Recheck for pixellation | 220 | Common interface (CI) |
| 50 | Save value of drive strength | 300 | Remote control unit |
| 60 | Output video signal | 301 | Remote control signals |
| 70 | Increase phase shift of clock signal | 302 | Control signals |
| 80 | Recheck for pixellation | 401 | Broadcast signal in |
| 90 | Save values of drive strength and of phase shift | 402 403 | Scrambled transport stream Descrambled transport stream |
| 100 | Output video signal | 404 | Video signal out |
| 101 | Tuner | 405 | Audio signal out |
| 102 | Demodulator | 500 | De-pixellation module |
| 103 | Microprocessor | 501 | Pixellation detector |
| 104 | Demultiplexer | 502 | Microprocessor |
| 105 | MPEG Decoder | 503 | Memory |
| 110 | Scale video signal for display | | |
| 115 | Recall saved values of drive strength and/or phase shift | | |

## Claims

1. A device (500) for adapting a transport stream signal (402, 403), wherein the device at least comprises:
a video signal pixellation detector (501);
a processor (502) operable in response to detection of pixellation in a video signal (404) by the pixellation detector (501) to instruct a demodulator (102) of a common interface equipment (1) in communication with the device (500) to vary a drive strength of the transport stream signal (402) from which the video signal (404) is derived; and
a memory (503) operable to save a value of the drive strength of the transport stream signal (402) for the common interface equipment (1) with which the device (500) is in communication.

2. A device for adapting a transport stream signal according to claim 1, wherein:
the processor (502) is operable in response to detection of pixellation in a video signal (404) by the pixellation detector (501) to instruct a decoder (105) of the common interface equipment (1) to vary a phase shift of a clock signal of the transport stream (403); and
the memory (503) is operable to save a value of the phase shift of the clock signal for the common interface equipment (1) with which the device (500) is in communication.

3. A device for adapting a transport stream signal according to claim 1 or claim 2, wherein:
the processor (502) is operable to instruct at least one of the demodulator (102) to incrementally increase the drive strength and the decoder (105) to incrementally increase the phase shift; and
the pixellation detector (501) is operable to check for a pixellation in a video signal (404) after each respective incremental increase in the drive strength and/or the phase shift, and to report on the detection of any pixellation in the video signal (404) to the processor (502) after each such respective incremental increase.

4. A device for adapting a transport stream signal according to any one of the preceding claims, wherein:
the pixellation detector (501) is operable to detect the severity of any pixellation effect in the video signal (404) and to report that severity to the processor (502); and
the processor (502) is operable to instruct at least one of the demodulator (102) to vary the drive strength and the decoder (105) to vary the phase shift according to the severity of the pixellation effect reported to the processor (502) by the pixellation detector (501).

5. A device for adapting a transport stream signal according to any one of the preceding claims, wherein the processor (502) is operable to:
recognize the same type of common interface equipment (1) put in communication with the device (500);
recall at least one of the saved values of the drive strength and of the phase shift from the memory (503) for the same type of common interface equipment (1); and to
instruct at least one of the demodulator (102) and the decoder (105) of the same type of common interface equipment (1) to adjust the actual values of the drive strength and of the phase shift to match the respective saved values of the drive strength and/or the phase shift recalled from the memory (503).

6. A visual display apparatus at least comprising:
a display screen; and
a device (500) for adapting a transport stream signal according to any one of claims 1 to 5, providing an output to the display screen.

7. A method of adapting a transport stream signal, the method at least comprising:
checking (10) a video signal (404) for pixellation;
if no pixellation is detected in the video signal, outputting (20) the video signal; whereas
if pixellation is detected in the video signal:
varying (30) a drive strength of the transport stream signal (402) from which the video signal (404) is derived;
rechecking (40) the video signal for pixellation after varying the drive strength; and
if no pixellation is detected in the video signal after varying the drive strength, saving (50) the value of the drive strength for which no pixellation is detected for a common interface equipment (1) which is processing the transport stream signal, and outputting (60) the video signal derived from the transport stream signal with the saved value of the drive strength for which no pixellation is detected; whereas
if pixellation is still detected in the video signal after varying the drive strength, saving (90) the value of the drive strength for which the least pixellation is detected for the common interface equipment (1).

8. A method of adapting a transport stream signal according to claim 7, wherein:
varying (30) a drive strength of the transport stream signal (402) from which the video signal (404) is derived comprises incrementally increasing (30) the drive strength; and
rechecking (40) the video signal for pixellation after varying the drive strength comprises rechecking (40) the video signal for pixellation after each incremental increase in the drive strength.

9. A method of adapting a transport stream signal according to claim 7 or claim 8, further comprising, if pixellation is still detected in the video signal after varying the drive strength, outputting (60) the video signal derived from the transport stream signal with the saved value of the drive strength for which the least pixellation is detected.

10. A method of adapting a transport stream signal according to claim 7 or claim 8, further comprising, if pixellation is still detected in the video signal after varying the drive strength:
varying (70) a phase shift of the transport stream clock signal;
rechecking (80) the video signal for pixellation after varying the phase shift until no pixellation is detected in the video signal;
saving (90) the value of the phase shift for which no pixellation is detected for the common interface equipment (1); and
outputting (100) the video signal derived from the transport stream signal with the saved values of the drive strength for which the least pixellation is detected and of the phase shift.

11. A method of adapting a transport stream signal according to claim 10, wherein:
varying (70) a phase shift of the transport stream clock signal comprises incrementally increasing (70) a phase shift of the transport stream clock signal; and
rechecking (80) the video signal for pixellation after varying the phase shift until no pixellation is detected in the video signal comprises rechecking (80) the video signal for pixellation after each incremental increase in the phase shift until no pixellation is detected in the video signal.

12. A method of adapting a transport stream signal according to any one of claims 7 to 11, the method further comprising:
detecting the severity of any pixellation effect in the video signal (404); and
varying at least one of the drive strength and the phase shift according to the severity of the pixellation effect.

13. A method of adapting a transport stream signal according to any one of claims 7 to 12, the method further comprising:
recognizing the same type of common interface equipment (1);
recalling (115) at least one of the saved values of the drive strength and of the phase shift for the same type of common interface equipment (1); and
adjusting at least one of the actual values of the drive strength and of the phase shift to match the respective saved values of the drive strength and/or the phase shift.

14. A method of adapting a transport stream signal according to any one of claims 7 to 13, the method further comprising:
scaling (110) the video signal (404); and
displaying the scaled video signal on a display screen.

15. A computer program product having stored thereon a program code to be run on a system for executing one or more than one of the methods according to any one of claims 7 to 14.

## Patentansprüche

1. Eine Vorrichtung (500) zum Anpassen eines Transportstromsignals (402, 403), wobei die Vorrichtung mindestens umfasst:
einen Videosignal-Pixelbildungsdetektor (501);
einen Prozessor (502), der als Reaktion auf die Detektion einer Pixelierung in einem Videosignal (404) durch den Pixelierungsdetektor (501) betreibbar ist, um einen Demodulator (102) einer Common-Interface-Ausrüstung (1), die mit der Vorrichtung (500) in Kommunikation steht, anzuweisen, eine Antriebsstärke des Transportstromsignals (402), von dem das Videosignal (404) abgeleitet wird, zu variieren; und
einen Speicher (503), der so betreibbar ist, dass er einen Wert der Antriebsstärke des Transportstromsignals (402) für die Common-Interface-Ausrüstung (1) speichert, mit der das Gerät (500) in Kommunikation steht.

2. Eine Vorrichtung zum Anpassen eines Transportstromsignals nach Anspruch 1, wobei:
der Prozessor (502) in Reaktion auf die Detektion von Pixelierung in einem Videosignal (404) durch den Pixelierungsdetektor (501) betreibbar ist, um einen Decoder (105) der Common-Interface-Ausrüstung (1) anzuweisen, eine Phasenverschiebung eines Taktsignals des Transportstroms (403) zu variieren; und
der Speicher (503) so betreibbar ist, dass er einen Wert der Phasenverschiebung des Taktsignals für die gemeinsame Schnittstellenausrüstung (1) speichert, mit der die Vorrichtung (500) in Kommunikation steht.

3. Eine Vorrichtung zum Anpassen eines Transportstromsignals nach Anspruch 1 oder Anspruch 2, wobei:
der Prozessor (502) so betreibbar ist, dass er mindestens einen der Demodulatoren (102) anweist, die Antriebsstärke inkrementell zu erhöhen, und den Decodierer (105) anweist, die Phasenverschiebung inkrementell zu erhöhen; und
der Pixelbildungsdetektor (501) so betreibbar ist, dass er nach jeder jeweiligen inkrementellen Erhöhung der Antriebsstärke und/oder der Phasenverschiebung auf eine Pixelbildung in einem Videosignal (404) prüft und dem Prozessor (502) nach jeder jeweiligen inkrementellen Erhöhung über die Erkennung einer Pixelbildung in dem Videosignal (404) Bericht erstattet.

4. Eine Vorrichtung zum Anpassen eines Transportstromsignals gemäß einem der vorhergehenden Ansprüche, wobei:
der Pixelbildungsdetektor (501) betreibbar ist, um den Schweregrad irgendeines Pixelbildungseffekts in dem Videosignal (404) zu erfassen und diesen Schweregrad an den Prozessor (502) zu melden; und
der Prozessor (502) so betreibbar ist, dass er mindestens einen der Demodulatoren (102) anweist, die Antriebsstärke zu variieren, und den Decodierer (105) anweist, die Phasenverschiebung entsprechend dem Schweregrad des vom Pixelbildungsdetektor (501) an den Prozessor (502) gemeldeten Pixelbildungseffekts zu variieren.

5. Eine Vorrichtung zum Anpassen eines Transportstromsignals gemäß irgendeinem der vorhergehenden Ansprüche, wobei der Prozessor (502) dazu betreibbar ist:
den gleichen Typ von Common-Interface-Ausrüstung (1) zu erkennen, die mit der Vorrichtung (500) in Kommunikation gebracht wird;
mindestens einen der gespeicherten Werte der Antriebsstärke und der Phasenverschiebung aus dem Speicher (503) für denselben Typ von Common-Interface-Ausrüstung (1) abzurufen; und
mindestens einen von Demodulator (102) und Decoder (105) desselben Typs von Common-Interface-Ausrüstung (1) anweisen, die tatsächlichen Werte der Antriebsstärke und der Phasenverschiebung so einzustellen, dass sie mit den jeweils gespeicherten Werten der Antriebsstärke und/oder der aus dem Speicher (503) abgerufenen Phasenverschiebung übereinstimmen.

6. Ein visuelles Anzeigegerät, das mindestens umfaßt:
einen Anzeigebildschirm; und
eine Vorrichtung (500) zur Anpassung eines Transportstromsignals gemäß einem der Ansprüche 1 bis 5, die eine Ausgabe auf dem Bildschirm ermöglicht.

7. Ein Verfahren zum Anpassen eines Transportstromsignals, wobei das Verfahren zumindest umfasst:
Prüfen (10) eines Videosignals (404) auf Pixelierung;
wenn keine Pixelierung in dem Videosignal detektiert wird, Ausgeben (20) des Videosignals; wobei
wenn Pixelierung im Videosignal erkannt wird:
Variieren (30) einer Antriebsstärke des Transportstromsignals (402), von dem das Videosignal (404) abgeleitet wird;
erneutes Prüfen (40) des Videosignals auf Pixelierung nach Änderung der Antriebsstärke; und
wenn im Videosignal nach Änderung der Ansteuerungsstärke keine Pixelierung festgestellt wird, Speichern (50) des Wertes der Ansteuerungsstärke, für die keine Pixelierung festgestellt wird, für ein Gerät (1) mit gemeinsamer Schnittstelle, das das Transportstromsignal verarbeitet, und Ausgeben (60) des aus dem Transportstromsignal abgeleiteten Videosignals mit dem gespeicherten Wert der Ansteuerungsstärke, für die keine Pixelierung festgestellt wird; wobei
wenn im Videosignal nach Variation der Ansteuerungsstärke immer noch Pixelierung im Videosignal erkannt wird, Speichern (90) des Wertes der Ansteuerungsstärke, bei der die geringste Pixelierung für das Common-Interface-Gerät (1) erkannt wird.

8. Ein Verfahren zum Anpassen eines Transportstromsignals nach Anspruch 7, wobei:
das Variieren (30) einer Ansteuerungsstärke des Transportstromsignals (402), von dem das Videosignal (404) abgeleitet wird, ein inkrementelles Erhöhen (30) der Ansteuerungsstärke umfasst; und
die erneute Prüfung (40) des Videosignals auf Pixelierung nach Änderung der Antriebsstärke umfasst die erneute Prüfung (40) des Videosignals auf Pixelierung nach jeder inkrementellen Erhöhung der Antriebsstärke.

9. Verfahren zum Anpassen eines Transportstromsignals nach Anspruch 7 oder Anspruch 8, ferner umfassend, wenn nach dem Variieren der Ansteuerungsstärke immer noch eine Pixelierung in dem Videosignal detektiert wird, Ausgeben (60) des aus dem Transportstromsignal abgeleiteten Videosignals mit dem gespeicherten Wert der Ansteuerungsstärke, für die die geringste Pixelierung detektiert wird.

10. Verfahren zum Anpassen eines Transportstromsignals nach Anspruch 7 oder 8, ferner umfassend, wenn nach dem Variieren der Ansteuerstärke immer noch Pixelbildung in dem Videosignal detektiert wird:
Variieren (70) einer Phasenverschiebung des Transportstrom-Taktsignals;
erneutes Prüfen (80) des Videosignals auf Pixelierung nach Variation der Phasenverschiebung, bis keine Pixelierung in dem Videosignal detektiert wird;
Speichern (90) des Wertes der Phasenverschiebung, für die keine Pixelierung detektiert wird, für das Common-Interface-Gerät (1); und
Ausgabe (100) des aus dem Transportstromsignal abgeleiteten Videosignals mit den gespeicherten Werten der Antriebsstärke, für die die geringste Pixelierung erkannt wird, und der Phasenverschiebung.

11. Verfahren zum Anpassen eines Transportstromsignals nach Anspruch 10, wobei:
das Variieren (70) einer Phasenverschiebung des Transportstrom-Taktsignals ein inkrementelles Erhöhen (70) einer Phasenverschiebung des Transportstrom-Taktsignals umfasst; und
Die erneute Überprüfung (80) des Videosignals auf Pixelierung nach Änderung der Phasenverschiebung, bis keine Pixelierung im Videosignal festgestellt wird, umfasst die erneute Überprüfung (80) des Videosignals auf Pixelierung nach jeder inkrementellen Erhöhung der Phasenverschiebung, bis keine Pixelierung im Videosignal festgestellt wird.

12. Verfahren zum Anpassen eines Transportstromsignals nach einem der Ansprüche 7 bis 11, wobei das Verfahren ferner umfasst:
Erfassen des Schweregrads eines Bildpunktbildungseffekts im Videosignal (404); und
Variation von mindestens einer der Antriebsstärke und der Phasenverschiebung je nach Schwere des Pixelationseffekts.

13. Verfahren zum Anpassen eines Transportstromsignals gemäß einem der Ansprüche 7 bis 12, wobei das Verfahren ferner umfasst:
Erkennen desselben Typs von Common-Interface-Ausrüstung (1);
Abrufen (115) von mindestens einem der gespeicherten Werte der Antriebsstärke und der Phasenverschiebung für denselben Typ von Common-Interface-Ausrüstung (1); und
Anpassung mindestens eines dertatsächlichen Werte der Antriebsstärke und der Phasenverschiebung an die jeweils gespeicherten Werte der Antriebsstärke und/oder der Phasenverschiebung.

14. Verfahren zum Anpassen eines Transportstromsignals nach einem der Ansprüche 7 bis 13, wobei das Verfahren ferner umfasst:
Skalieren (110) des Videosignals (404); und
Anzeige des skalierten Videosignals auf einem Bildschirm.

15. Ein Computerprogrammprodukt oder ein Programmcode oder System zur Ausführung einer oder mehrerer der Verfahren nach einem der Ansprüche 7 bis 14.

## Revendications

1. Un dispositif (500) pour adapter un signal de flux de transport (402, 403), dans lequel le dispositif comprend au moins :
un détecteur de pixellation de signal vidéo (501) ;
un processeur (502) pouvant fonctionner en réponse à la détection d'une pixellation dans un signal vidéo (404) par le détecteur de pixellation (501) pour ordonner à un démodulateur (102) d'un équipement d'interface commun (1) en communication avec le dispositif (500) de faire varier une intensité d'attaque du signal de flux de transport (402) à partir duquel le signal vidéo (404) est dérivé ; et
une mémoire (503) permettant de sauvegarder une valeur de l'intensité du signal de flux de transport (402) pour l'équipement d'interface commun (1) avec lequel le dispositif (500) est en communication.

2. Dispositif pour adapter un signal de flux de transport selon la revendication 1, dans lequel:
le processeur (502) peut fonctionner en réponse à la détection d'une pixellation dans un signal vidéo (404) par le détecteur de pixellation (501) pour ordonner à un décodeur (105) de l'équipement d'interface commun (1) de faire varier un déphasage d'un signal d'horloge du flux de transport (403) ; et
la mémoire (503) permet de sauvegarder une valeur du déphasage du signal d'horloge pour l'équipement d'interface commun (1) avec lequel le dispositif (500) est en communication.

3. Dispositif d'adaptation d'un signal de flux de transport selon la revendication 1 ou la revendication 2, dans lequel :
le processeur (502) est utilisable pour ordonner à au moins l'un des démodulateurs (102) d'augmenter incrémentalement la puissance d'entraînement et au décodeur (105) d'augmenter incrémentalement le déphasage ; et
le détecteur de pixellation (501) est utilisable pour vérifier la présence d'une pixellation dans un signal vidéo (404) après chaque augmentation incrémentielle respective de la puissance d'entraînement et/ou du déphasage, et pour signaler la détection de toute pixellation dans le signal vidéo (404) au processeur (502) après chaque augmentation incrémentielle respective.

4. Dispositif pour adapter un signal de flux de transport selon l'une quelconque des revendications précédentes, dans lequel :
le détecteur de pixellation (501) est utilisable pour détecter la gravité de tout effet de pixellation dans le signal vidéo (404) et pour signaler cette gravité au processeur (502) ; et
le processeur (502) peut être utilisé pour ordonner à au moins un des démodulateurs (102) de faire varier la puissance d'entraînement et au décodeur (105) de faire varier le déphasage en fonction de la gravité de l'effet de pixellation signalé au processeur (502) par le détecteur de pixellation (501).

5. Dispositif pour adapter un signal de flux de transport selon l'une quelconque des revendications précédentes, dans lequel le processeur (502) peut être utilisé pour :
reconnaître le même type d'équipement d'interface commun (1) mis en communication avec le dispositif (500) ;
rappeler au moins une des valeurs sauvegardées de la puissance d'entraînement et du déphasage de la mémoire (503) pour le même type d'équipement d'interface commune (1) ; et à
demander à au moins un des démodulateurs (102) et décodeurs (105) du même type d'équipement d'interface commune (1) d'ajuster les valeurs réelles de la puissance d'entraînement et du déphasage pour qu'elles correspondent aux valeurs respectives enregistrées de la puissance d'entraînement et/ou du déphasage rappelées de la mémoire (503).

6. Un appareil d'affichage visuel comprenant au moins :
un écran d'affichage ; et
un dispositif (500) pour adapter un signal de flux de transport selon l'une des revendications 1 à 5, fournissant une sortie à l'écran d'affichage.

7. Une méthode d'adaptation d'un signal de flux de transport, la méthode comprenant au moins :
la vérification (10) de la pixellisation d'un signal vidéo (404) ;
si aucune pixellation n'est détectée dans le signal vidéo, la sortie (20) du signal vidéo ; tandis que
si une pixellation est détectée dans le signal vidéo :
en faisant varier (30) la force d'entraînement du signal de flux de transport (402) dont le signal vidéo (404) est dérivé ;
revérifier (40) le signal vidéo pour la pixellation après avoir fait varier la puissance d'entraînement ; et
si aucune pixellation n'est détectée dans le signal vidéo après avoir fait varier l'intensité de la commande, sauvegarder (50) la valeur de l'intensité de la commande pour laquelle aucune pixellation n'est détectée pour un équipement d'interface commun (1) qui traite le signal du flux de transport, et sortir (60) le signal vidéo dérivé du signal du flux de transport avec la valeur sauvegardée de l'intensité de la commande pour laquelle aucune pixellation n'est détectée ; considérant que
si une pixellation est toujours détectée dans le signal vidéo après avoir fait varier la puissance de l'entraînement, enregistrer (90) la valeur de la puissance d'entraînement pour laquelle la moindre pixellation est détectée pour l'équipement d'interface commun (1).

8. Une méthode d'adaptation d'un signal de flux de transport selon la revendication 7, dans lequel :
la variation (30) d'une force d'entraînement du signal de flux de transport (402) à partir duquel le signal vidéo (404) est dérivé comprend l'augmentation incrémentielle (30) de la force d'entraînement ; et
la revérification (40) du signal vidéo pour la pixellation après avoir fait varier la puissance du lecteur comprend la revérification (40) du signal vidéo pour la pixellation après chaque augmentation incrémentielle de la puissance du lecteur.

9. Une méthode d'adaptation d'un signal de flux de transport selon la revendication 7 ou la revendication 8, comprenant en outre, si une pixellation est toujours détectée dans le signal vidéo après avoir fait varier l'intensité de commande, la sortie (60) du signal vidéo dérivé du signal de flux de transport avec la valeur sauvegardée de l'intensité de commande pour laquelle la moindre pixellation est détectée.

10. Une méthode d'adaptation d'un signal de flux de transport selon la revendication 7 ou la revendication 8, comprenant en outre, si la pixellation est toujours détectée dans le signal vidéo après avoir fait varier l'intensité de l'entraînement :
faire varier (70) un déphasage du signal d'horloge du flux de transport ;
revérifier (80) le signal vidéo pour la pixellation après avoir fait varier le déphasage jusqu'à ce qu'aucune pixellation ne soit détectée dans le signal vidéo ;
sauvegarder (90) la valeur du déphasage pour lequel aucune pixellation n'est détectée pour l'équipement d'interface commune (1) ; et
la sortie (100) du signal vidéo dérivé du signal du flux de transport avec les valeurs enregistrées de la puissance d'entraînement pour laquelle la moindre pixellation est détectée et du déphasage.

11. Une méthode d'adaptation d'un signal de flux de transport selon la revendication 10, dans laquelle :
la variation (70) d'un déphasage du signal d'horloge du flux de transport comprend l'augmentation incrémentielle (70) d'un déphasage du signal d'horloge du flux de transport ; et
La revérification (80) du signal vidéo pour la pixellation après avoir fait varier le déphasage jusqu'à ce qu'aucune pixellation ne soit détectée dans le signal vidéo comprend la revérification (80) du signal vidéo pour la pixellation après chaque augmentation incrémentielle du déphasage jusqu'à ce qu'aucune pixellation ne soit détectée dans le signal vidéo.

12. Une méthode d'adaptation d'un signal de flux de transport selon l'une quelconque des revendications 7 à 11, la méthode comprenant en outre :
la détection de la gravité de tout effet de pixellation dans le signal vidéo (404) ; et
faire varier au moins l'une des forces d'entraînement et le déphasage en fonction de la gravité de l'effet de pixellisation.

13. Une méthode d'adaptation d'un signal de flux de transport selon l'une quelconque des revendications 7 à 12, la méthode comprenant en outre :
la reconnaissance du même type d'équipement d'interface commun (1) ;
le rappel (115) d'au moins une des valeurs sauvegardées de l'intensité d'entraînement et du déphasage pour le même type d'équipement d'interface commune (1) ; et
ajuster au moins une des valeurs réelles de la force motrice et du déphasage pour qu'elles correspondent aux valeurs respectives enregistrées de la force motrice et/ou du déphasage.

14. Une méthode d'adaptation d'un signal de flux de transport selon l'une quelconque des revendications 7 à 13, la méthode comprenant en outre :
la mise à l'échelle (110) du signal vidéo (404) ; et
l'affichage du signal vidéo mis à l'échelle sur un écran.

15. Un produit de programme informatique ou un code de programme ou un système permettant d'exécuter une ou plusieurs des méthodes selon l'une des revendications 7 à 14.
